# EUROPEAN PATENT APPLICATION

(11) **EP 3 101 343 A1**
(43) Date of publication of application: **07.12.2016**
(21) Application number: 15170803.9
(22) Date of filing: 05.06.2015
(51) Int. Cl.: F23N 5/24, F23R 3/28

(54) **INTELLIGENT CONTROL METHOD WITH VARIABLE THRESHOLDS BASED ON VIBRATION READINGS**

(71) Applicant: Siemens Aktiengesellschaft, 80333 München (DE)
(72) Inventor: BULAT, Ghenadie, Lincoln, LN6 8BD (GB)
(74) Representative: Maier, Daniel Oliver

(57) **Abstract**

The present invention describes a method for controlling an engine vibration of a gas turbine engine (110). The engine vibration of the gas turbine engine (110) is measured. The measured engine vibration is compared with a threshold value of a nominal engine vibration. A fuel supply parameter of a fuel supply to a combustion chamber (111) of the gas turbine engine (110) is controlled for controlling combustion dynamics of a combustion flame (112) within the combustion chamber (111). The engine vibration of the gas turbine engine (110) is indicative of the combustion dynamics of the combustion flame (112), so that the fuel supply is adjusted for controlling the combustion dynamics if the measured engine vibration exceeds the threshold value of the nominal engine vibration.

## Description

### Field of the invention

The present invention relates to a method for controlling an engine vibration of a gas turbine engine. Furthermore, the present invention relates to a gas turbine engine.

### Art background

In gas turbines are applied complex control methods for the fuel supply in order to reduce emissions and in order to provide a stable combustion flame. Furthermore, an optimum fuel split ratio should be identified, so that reliable engine operation can be achieved.

WO 2007/082608 discloses a combustion apparatus including an incoming fuel supply line, which supplies fuel in a plurality of fuel-supply lines to one or more burners. A burner comprises a combustion volume. A temperature sensor is located in the apparatus so as to yield temperature information relating to a component part of the apparatus, which is to be prevented from overheating. The apparatus also includes a control arrangement, which detects the temperature-sensor output and, depending on that output, varies the fuel supplies to one or more of the burners in such a way as to maintain the temperature of the component part below a maximum value, while keeping the fuel in the incoming fuel supply line substantially constant. The control unit also strives to adjust the operating conditions of the apparatus so that pressure oscillations are kept below a maximum value.

Specifically, conventional control methods avoid high metal temperatures and high combustion dynamics, whilst increasing engine reliability with lowest emission, in particular NOx production. Furthermore, an improvement of the control algorithm with the emphasis towards the predictive emissions monitoring for gaseous and liquid fuels using standard or variable composition fuels are known.

Conventional intelligent control inputs are based only on combustion and performance instrumentation such as metal temperature, combustion dynamics (pressure oscillations) sensors or load.

However, components of the gas turbine, in particular rotating equipment, may suffer from sub-synchronous vibration readings. The vibration varies for certain operating conditions of the gas turbine.

### Summary of the invention

It may be an object of the present invention to provide a proper vibration control for a gas turbine engine.

This object is solved by a method for controlling an engine vibration of a gas turbine engine and by a gas turbine according to the independent claims.

According to a first aspect of the present invention a method for controlling an engine vibration of a gas turbine engine is described. By the method the engine vibration of the gas turbine engine is measured. Next, the measured engine vibration is compared with a threshold value of a nominal engine vibration. A fuel supply parameter of a fuel supply to a combustion chamber of the gas turbine engine is controlled by the method for controlling combustion dynamics of a combustion flame within the combustion chamber. The engine vibration of the gas turbine engine is indicative of the combustion dynamics of the combustion flame, so that the fuel supply is adjusted for controlling the combustion dynamics if the measured engine vibration exceeds the threshold value of the nominal engine vibration.

According to a further aspect of the present invention, a gas turbine is provided. The gas turbine is configured for conducting the method above. In particular the gas turbine comprises a measuring unit (such a vibration sensor, e.g. a piezo element for measuring vibration) for measuring an engine vibration of the gas turbine engine. The gas turbine engine further comprises a comparing unit configured for comparing the measured engine vibration with a threshold value of a nominal engine vibration. The gas turbine engine further comprises a control unit configured for controlling a fuel supply parameter of a fuel supply to a combustion chamber of the gas turbine engine for controlling combustion dynamics of a combustion flame within the combustion chamber. The engine vibration of the gas turbine engine is indicative of the combustion dynamics of the combustion flame, so that the fuel supply is adjusted for controlling the combustion dynamics if the measured engine vibration exceeds the threshold value of the nominal engine vibration.

The gas turbine engine generates mechanical power which may be converted to electrical power by a generator. The gas turbine engine comprises amongst others a combustion chamber. In the combustion chamber, thermal energy is added to the working fluid of the gas turbine engine. Fuel (e.g. pure fuel or an fuel/air mixture) is injected into the combustion chamber. The fuel is ignited and a combustion flame burns inside the combustion chamber.

Dependent on the amount of fuel and the location of injecting the fuel, specific combustion flame characteristics are given.

For example, the combustion flame is dynamic, such that combustion dynamics (i.e. pressure oscillations) of the combustion flame and the working fluid inside the combustion chamber, respectively, are given. For example, the pressure oscillation may be determined by a pressure difference per time (Δp/t) or as a pressure difference about the mean pressure of combustor.

The pressure oscillations may cause negative effects to the combustion flame, such as fretting or blow off of the combustion flame. However, it is an aim to generate low emissions and therefore the combustion flame is generated by a lean fuel mixture. A lean fluid fuel mixture on the other hand generates high pressure oscillation. Hence, the pressure oscillation has to be monitored and measured (e.g. by a pressure sensor within the combustion chamber) in order to provide a stable combustion flame with low emissions.

During operation of the gas turbine engine vibration on the gas turbine components are caused due to the particular the rotating components, such as the gas turbine shaft or the rotating turbine blades of the gas turbine engine.

The engine vibration may be measured for example by an acceleration sensor which measures the frequency and the vibration amplitude of the predefined location of a gas turbine component of the gas turbine engine. For example, the vibration may be defined in millimeters per second (mm/s) for example.

The nominal engine vibration defines a limit and a threshold value, respectively, of a gas turbine component of the gas turbine engine. For example, if the threshold value of the nominal engine vibration is an upper limit and the vibration exceeds the threshold value, damage to the respective gas turbine component may occur and control action to reduce evaporation is initiated. The threshold value for the nominal engine vibration of a gas turbine component is defined by conducting a plurality of test runs in test cycles of the gas turbine engine or a prototype of the gas turbine engine under for example laboratory conditions. The threshold value for the nominal engine vibration may be stored in a database. Furthermore, the threshold value for the nominal engine vibration may be given for plurality of different operating points of the gas turbine engine.

Additionally, it has found out by the present invention that the pressure oscillation of the combustion flame causes also gas turbine engine vibration. Specifically, by the present invention it has found out that the engine vibration of the gas turbine engine is indicative of the combustion dynamics of the combustion flame.

In other words, if the engine vibration is indicative of the combustion dynamics of the combustion flame, a control of the vibration may be accomplished by controlling the combustion dynamics of the combustion flame. The combustion dynamics of the combustion flame is controllable by adjusting the fuel supply to the combustion chamber.

On the basis of this knowledge, by the present invention the fuel supply is adjusted for controlling the combustion dynamics if the measured engine vibration exceeds the threshold value of the nominal engine vibration. The fuel supply parameter of the fuel supply to the combustion chamber of the gas turbine engine is controlled in order to adjust the vibration of the gas turbine engine and in particular gas turbine components thereof.

Hence, by the approach of the present invention, the combustion instrumentation and hence the combustion control system is connected and linked with the vibration instrumentation. The combustion instrumentation and the vibration instrumentation are now considered in one common control system. Hence, by the present invention a more optimal regime for the whole gas turbine engine may be identified without considering separately a plurality of individual subsystems. Hence, by the present invention, an improved vibration control for a gas turbine engine and hence a longer lifetime for the gas turbine components is achieved.

According to an exemplary embodiment of the present invention, the fuel supply parameter is the mass flow of fuel to the combustion chamber and/or the pilot fuel/main flow split of the combustion chamber.

In particular, the pilot fuel/main flow split of the fuel injected into the combustion chamber is beneficial for controlling both, the combustion flame stability, the emissions and the vibrations. The combustion chamber comprises a pilot burner from which a pilot fuel is injected into the combustion chamber. Further downstream of the pilot burner a main fuel is injected into the combustion chamber, for example by a swirler device. The pilot fuel is in particular a rich fuel mixture and provides a stable flame, wherein the main fuel is rather a lean fuel mixture which provides the main combustion flame with low emissions in comparison to the burned pilot flame.

Hence, by increasing the pilot fuel/main flow split (which means to increase the amount of pilot fuel with respect to the main fuel), a more stable combustion flame with lower combustion dynamics and higher emissions is generated. On the other side, by lowering the pilot fuel/main flow split (which means to decrease the amount of pilot fuel with respect to the main fuel), a combustion flame with higher combustion dynamics and lower emissions is generated. Hence, it is an aim to lower the pilot fuel/main flow split in order to reduce the emissions. However, in order to prevent negative combustion flame characteristics, such as fretting or blow off, by the present invention, besides the consideration of the pressure dynamics, it is additionally controlled that a measured engine vibration complies with a threshold value of the nominal engine vibration before the pilot fuel/main fuel split is amended.

According to a further exemplary embodiment, the threshold value of the nominal engine vibration is a top threshold value which defines an upper nominal limit of the engine vibration. The fuel supply parameter is adjusted for controlling the combustion dynamics if the measured engine vibration is higher than the top threshold value of the nominal engine vibration.

The fuel supply parameter may be kept constant if the measured engine vibration is low and does not exceed the threshold value of the nominal engine vibration.

According to a further exemplary embodiment, the threshold value of the nominal engine vibration is a lower threshold value which defines a lower nominal limit of the engine vibration. The fuel supply parameter is adjusted for controlling the combustion dynamics if the measured engine vibration is lower than the lower threshold value of the nominal engine vibration.

Hence, if the measured engine vibration is lower than the lower threshold value of the nominal engine vibration, the combustion dynamics and hence the combustion flame is stable enough and additionally the gas turbine engine components can withstand higher vibration. In this case, the fuel supply can be adjusted so that a higher vibration is caused but on the other side for example a leaner combustion flame with a lower emissions (and also higher combustion dynamics) can be adjusted. Hence, by the present invention, the relation between low emission and vibration threshold can be optimised.

According to a further exemplary embodiment, the threshold value of the nominal engine vibration is variable and is dependent on the combustion dynamics of the combustion flame such that
a) if the combustion dynamics decline, the threshold value for the engine vibration is increased, and
b) if the combustion dynamics raise, the threshold value for the engine vibration is lowered.

Hence, by the present exemplary embodiment of the invention, a variable threshold value or level for the nominal engine vibration is provided. If the combustion dynamics is for example very low, than the threshold for the nominal engine vibration can be higher without damaging the gas turbine engine. Therefore, the threshold value for the nominal engine vibration (which is indicative of the engine vibration) can be increased. Hence, a further improvement of the inventive control algorithm is described with the emphasis towards using variable thresholds of the combustion dynamics and vibration based on vibration monitoring.

According to a further exemplary embodiment, the step of controlling the fuel supply parameter is conducted after a predetermined time period is lapsed from the time point of exceeding the threshold value of the nominal engine vibration. Hence, outlier of the measurement can be considered, such that the control of the fuel supply parameter is accomplished, after it is clear that the exceeding of the threshold value of the nominal engine vibration is not a unique incidence.

According to a further exemplary embodiment, the time period is determined by determining an integral of the time period on the one hand and a difference between threshold value of the nominal engine vibration and the measured value of the engine vibration.

By considering the time period under consideration of the integral, not only the time between the time point of exceeding the threshold value of the nominal engine vibration is considered, but also the exceeding value of the measured engine vibration. Hence, if the exceeding value of the measured engine vibration is higher a shorter time period until the controlling action of the fuel supply control is set. If the exceeding value of the measured engine vibration is lower a longer time period until the controlling action of the fuel supply control is set. Hence, a more reliable control of the vibrations can be achieved.

According to a further exemplary embodiment, the engine vibration of the gas turbine engine is measured at a gas turbine component of the gas turbine engine, wherein the gas turbine component is a gas generator, a power turbine, a gear box and/or a compressor train operation.

Hence, by the present invention it has been found out, that it is beneficial to address particular vibration modes of gas turbine components that were found to be responsive to fuel split changes (through combustion dynamics feedback). Hence, by controlling the vibration, the life time of the gas turbine engine may be increased, especially of rotating components of the gas turbine engine that may also benefit from intelligent control of combustion dynamics.

In case of vibration above a set threshold (i.e. the nominal engine vibration) then by changing the dynamics threshold level and/or the vibration threshold value, the fuel split will be changed and thus the vibration levels will be corrected.

It is proposed that the relative change in vibration reading (by how much the actual level is above the nominal vibration threshold or limit) will determine the threshold and the value for combustion dynamics. For example, if the vibration reading is about 20 micron/sec and the limit is 15 micron/sec, then approximately 30% difference of the vibration value is applied as a change of the high/to dynamics threshold value and 15% change to the low dynamics threshold. There will be different relationships between relative change in vibration and high and low dynamics thresholds values. However, these relationships may be determined in test runs of the gas turbine engine and stored in a data basis.

The vibration signal will be conditioned in a way to provide the average of last 30 seconds reading into the intelligent control system.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 shows a schematical view of a gas turbine combustion chamber within a gas turbine engine embodiment and a method for controlling an engine vibration of a gas turbine engine according to an exemplary embodiment of the present invention;
Fig. 2 and Fig. 3 show diagrams of a pilot/main fuel split control under consideration of the measured vibration according to an exemplary embodiment of the present invention; and
Fig. 4 shows a flow chart of a method for controlling the engine vibration under consideration of an upper vibration threshold limit and a lower vibration threshold limit.

### Detailed Description

The illustrations in the drawings are schematically. It is noted that in different figures, similar or identical elements are provided with the same reference signs.

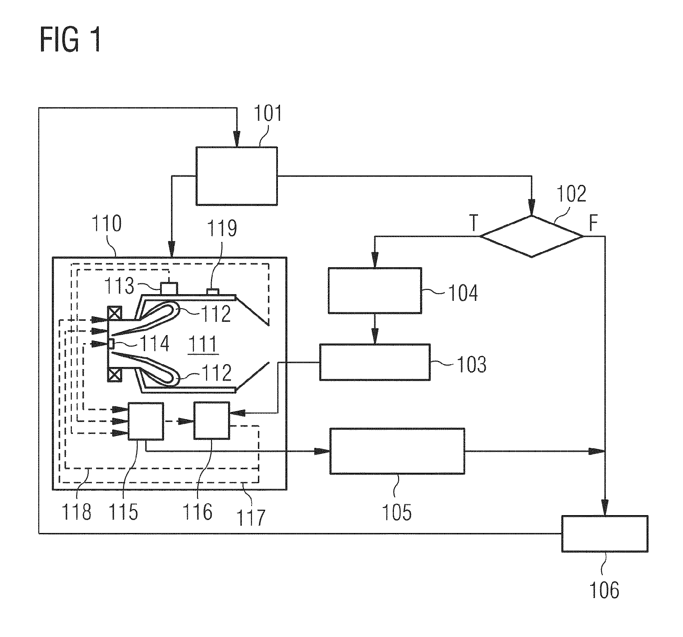

Fig. 1 shows a schematical view of a gas turbine combustion chamber within a gas turbine engine and a method for controlling an engine vibration of a gas turbine engine according to an exemplary embodiment of the present invention

The gas turbine engine 110 generates mechanical power which may be converted to electrical power by a generator. The gas turbine engine 110 comprises amongst others a combustion chamber 111. In the combustion chamber 111, thermal energy is added to the working fluid of the gas turbine engine 110. Fuel (e.g. pure fuel or an fuel/air mixture) is injected into the combustion chamber 111. The fuel is ignited and a combustion flame 112 burns inside the combustion chamber 111.

According to the present invention the gas turbine engine 110 comprises a measuring unit 119 (such a vibration sensor, e.g. a piezo element for measuring vibration) for measuring an engine vibration of the gas turbine engine 110 and in particular its components. The gas turbine engine 110 further comprises a comparing unit (which may be part of a control unit 115) configured for comparing the measured engine vibration with a threshold value of a nominal engine vibration. The gas turbine engine further comprises a control unit 115 configured for controlling a fuel supply parameter of a fuel supply to the combustion chamber 111 of the gas turbine engine 110 for controlling combustion dynamics of a combustion flame 112 within the combustion chamber 111. The engine vibration of the gas turbine engine 110 is indicative of the combustion dynamics of the combustion flame 112, so that the fuel supply is adjusted e.g. by a fuel control module 116 for controlling the combustion dynamics if the measured engine vibration exceeds the threshold value of the nominal engine vibration.

Fig. 1 shows also the method steps of a method for controlling an engine vibration of the gas turbine engine 110 according to an exemplary embodiment of the invention. The engine vibration of the gas turbine engine 110 is measured in step 101.

The measured engine vibration is compared with a threshold value of a nominal engine vibration in step 102.

The engine vibration of the gas turbine engine 110 is indicative of the combustion dynamics of the combustion flame 112, so that the fuel supply may be adjusted for controlling the combustion dynamics if the measured engine vibration exceeds the threshold value of the nominal engine vibration.

Accordingly, in step 103 a fuel supply parameter of the fuel supply to the combustion chamber 111 of the gas turbine engine 110 is controlled for controlling combustion dynamics of a combustion flame 112 within the combustion chamber 111, if the measured engine vibration exceeds the threshold value of the nominal engine vibration.

Dependent on the amount of fuel and the location of injecting the fuel, specific combustion flame characteristics are given. For example, the combustion flame 112 is dynamic, such that combustion dynamics (i.e. pressure oscillations) of the combustion flame 112 and the working fluid inside the combustion chamber 111, respectively, are given. For example, the pressure oscillation may be determined by a pressure difference per time (Δp/t) or as a pressure difference about the mean pressure of combustor.

During operation of the gas turbine engine 110, vibration on the gas turbine components is caused, in particular the rotating components, such as the gas turbine shaft or the rotating turbine blades of the gas turbine engine 110.

The engine vibration may be measured for example by an acceleration sensor 119 which measures the frequency and the vibration amplitude of the predefined location of a gas turbine component of the gas turbine engine. For example, the vibration may be defined in millimeters per second (mm/s) for example.

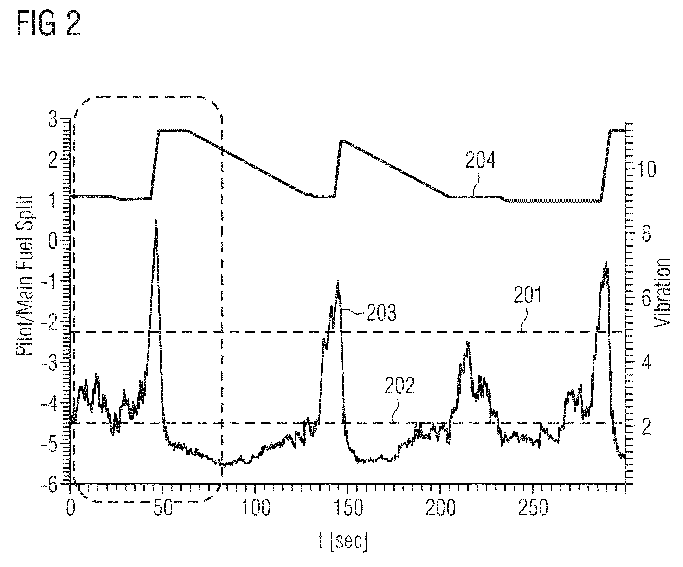

The nominal engine vibration defines a limit and a threshold value, respectively, of a gas turbine component of the gas turbine engine 110. For example, if the threshold value of the nominal engine vibration is an upper limit (see upper vibration threshold limit 201 in Fig. 2) and the vibration exceeds the threshold value, damage to the respective gas turbine component may occur and control action to reduce evaporation is initiated by the control unit 115. The threshold value for the nominal engine vibration of a gas turbine component is defined by conducting a plurality of test runs in test cycles of the gas turbine engine 110 or a prototype of the gas turbine engine 110 under for example laboratory conditions. The threshold value for the nominal engine vibration may be stored in a database which may be connected to the control unit 115. Furthermore, the threshold value for the nominal engine vibration may be given for plurality of different operating points of the gas turbine engine.

The fuel supply is adjusted by the control unit 115 (which controls the fuel control module 116) for controlling the combustion dynamics if the measured engine vibration exceeds the threshold value of the nominal engine vibration. The fuel supply parameter of the fuel supply to the combustion chamber 111 of the gas turbine engine 110 is controlled by the fuel control module 116 in order to adjust the vibration of the gas turbine engine and in particular gas turbine components thereof.

The fuel supply parameter which is controlled by the fuel control module 116 is e.g. the mass flow of fuel to the combustion chamber 111 and the pilot fuel/main flow split of the combustion chamber.

In particular, the pilot fuel/main flow split of the fuel injected into the combustion chamber 111 is beneficial for controlling both, the combustion flame stability, the emissions and the vibrations. The combustion chamber 111 comprises a pilot burner which is fed with fuel by a pilot fuel line 118 from which a pilot fuel is injected into the combustion chamber 111. Further downstream of the pilot burner a main fuel is injected by a main fuel line 117 into the combustion chamber 111, for example by a swirler device. The pilot fuel is in particular a rich fuel mixture and provides a stable flame, wherein the main fuel is rather a lean fuel mixture which provides the main combustion flame with low emissions in comparison to the burned pilot flame.

Furthermore, a temperature sensor 114 is arranged at the combustion chamber 111 for measuring the temperature of the combustion chamber 111 and i.e. the combustion flame 112. The temperature signal may be considered in the control unit 115, so that the combustion instrumentation and hence the combustion control system is connected and linked with the vibration instrumentation, so that the combustion instrumentation and the vibration instrumentation can be considered in one common control system. For example, additionally the NOx emission of the combustion flame 112 can be measured in step 105 and considered by the control unit 115 before a new measuring cycle 106 is started.

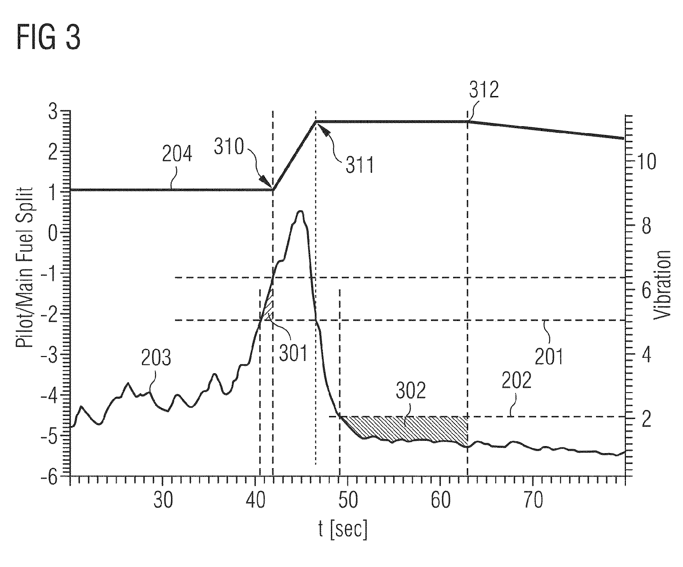

Fig. 2 and Fig. 3 show diagrams of a pilot/main fuel split control under consideration of the measured vibration according to an exemplary embodiment of the present invention. The diagram in Fig. 3 shows an enlarged section of the section in Fig. 2 which is surrounded by the dotted lines.

The lower line shows the vibration 203 over the time. The upper line shows the change of the pilot/main fuel split 204 over the time.

As can be taken form Fig. 2 and Fig. 3, by increasing the pilot fuel/main flow split 204 (which means to increase the amount of pilot fuel with respect to the main fuel), a more stable combustion flame 112 with lower combustion dynamics and higher emissions is generated. On the other side, by lowering the pilot fuel/main flow split 204 (which means to decrease the amount of pilot fuel with respect to the main fuel), a combustion flame 112 with higher combustion dynamics and lower emissions is generated. Hence, it is an aim to lower the pilot fuel/main flow split 204 in order to reduce the emissions. However, in order to prevent negative combustion flame characteristics, such as fretting or blow off, besides the consideration of the pressure dynamics it is additionally controlled if a measured engine vibration complies with a threshold value of the nominal engine vibration before the pilot fuel/main fuel split 204 is amended.

The threshold value of the nominal engine vibration is for example a top threshold value 201 which defines an upper nominal limit 201 of the engine vibration. The pilot fuel/main fuel split 204 is adjusted for controlling the combustion dynamics if the measured engine vibration is higher than the top threshold value of the nominal engine vibration 201. In particular, the pilot fuel/main fuel split 204 may be increased, so that more pilot fuel in comparison to the main fuel is injected into the combustion chamber 111, so that the combustion flame 112 is more stable and the measured engine vibration 203 decreased.

The pilot fuel/main fuel split 204 may be kept constant if the measured engine vibration 203 is low and does not exceed the upper threshold value 201 of the nominal engine vibration.

Furthermore, a lower threshold vibration limit 202 as threshold value of the nominal engine vibration is determined. The pilot fuel/main fuel split 204 is adjusted for controlling the combustion dynamics if the measured engine vibration 203 is lower than the lower threshold value 202 of the nominal engine vibration. In particular, the pilot fuel/main fuel split 204 may be decreased, so that more main fuel in comparison to the pilot fuel is injected into the combustion chamber 111, so that the combustion flame 112 is more instable and the measured engine vibration 203 may increase again.

Hence, if the measured engine vibration 203 is lower than the lower threshold value 202 of the nominal engine vibration, the combustion dynamics and hence the combustion flame 112 is stable enough and additionally the gas turbine engine 110 components can withstand higher vibration. In this case, the fuel supply can be adjusted so that a higher vibration is caused but on the other side for example a leaner combustion flame with lower emissions (and also higher combustion dynamics) can be adjusted.

The upper and lower threshold values 201, 202 of the nominal engine vibration may be variable and may be dependent on the combustion dynamics of the combustion flame 112 such that if the combustion dynamics decline, the upper and lower threshold values 201, 202 for the engine vibration may be increased and if the combustion dynamics raise, the upper and lower threshold values 201, 202 for the engine vibration is lowered.

Hence, variable upper and lower threshold values 201, 202 or levels for the nominal engine vibration are provided. If the combustion dynamics is for example very low, than the threshold for the nominal engine vibration can be higher without damaging the gas turbine engine.

As can be taken from Fig. 3 the control of the pilot fuel/main fuel split 204 is conducted after a predetermined time period has lapsed from the time point of exceeding the upper or lower threshold value 201, 202 of the nominal engine vibration. In particular, the time period is determined by determining an upper time integral 301 and a lower time integral 302 of the time period on the one hand and a difference between the respective upper or lower threshold value 201, 202 of the nominal engine vibration and the measured value 203 of the engine vibration.

For example, after the measured value 203 of the engine vibration exceeds the upper vibration threshold limit 201, the upper time integral 301 is calculated. The upper time integral 301 is determined by the time by which the measured vibration value 203 exceeds the upper vibration threshold limit 201 and the amount of exceeding the upper vibration threshold limit 201. If the upper time integral 301 has reached a predetermined threshold upper time integral value, controlling action of the pilot/main fuel split is started at start point 310 and the pilot/main fuel split is increased.

If the measured vibration 203 falls again under the upper vibration threshold limit 201, its top point 311 the raising of the pilot/main fuel split is stopped and the pilot/main fuel split is kept constant.

Furthermore, after the measured value 203 of the engine vibration falls below the lower vibration threshold limit 202, the lower time integral 302 is calculated. The lower time integral 302 is determined by the time by which the measured vibration value 203 is below the lower vibration threshold limit 202 and the amount of exceeding the lower vibration threshold limit 202. If the lower time integral 302 has reached a predetermined threshold lower time integral value, controlling action of the pilot/main fuel split is started at start point 312 and the pilot/main fuel split is decreased.

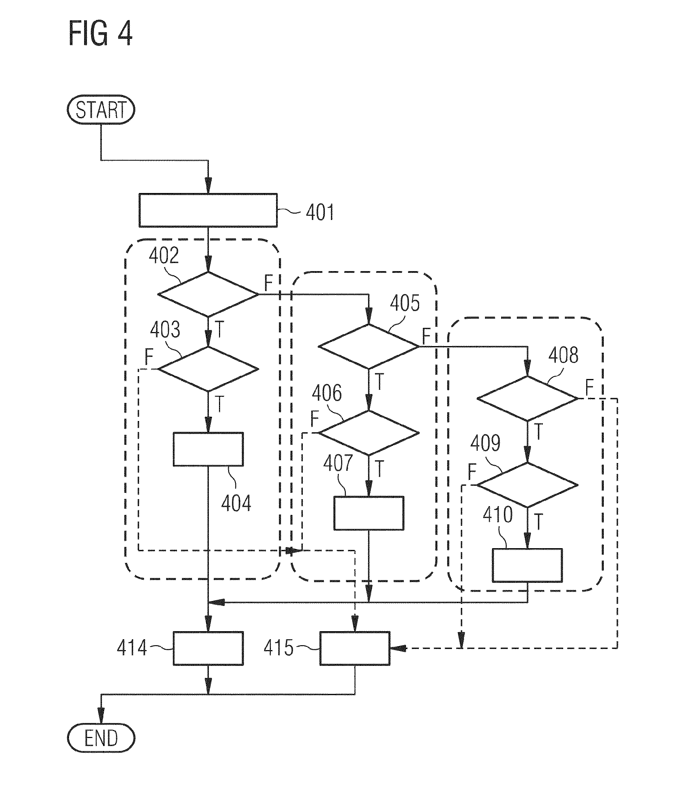

Fig. 4 shows a flow chart of a method for controlling the engine vibration under consideration of an upper vibration threshold limit and a lower vibration threshold limit.

The pressure oscillations may cause negative effects to the combustion flame 112, such as fretting or blow off of the combustion flame 112. However, it is an aim to generate low emissions and therefore the combustion flame 112 is generated by a lean fuel mixture. A lean fluid fuel mixture on the other hand generates high pressure oscillation, particularly of low frequencies. Hence, the pressure oscillation has to be monitored and measured (e.g. by a pressure sensor 113 within the combustion chamber 111) in order to provide a stable combustion flame with low emissions.

First, in step 401, the vibration and temperature parameters, such as the burner metal temperature, is measured. Furthermore, pressure oscillations of low frequencies of the combustion flame 111 are measured.

In step 402, it is confirmed, if the measured vibration and temperature parameter exceeds the upper vibration threshold limit 202 and/or the upper pressure oscillation threshold limit.

If the measured vibration and temperature parameter exceeds the upper vibration threshold limit 202, it is then tested in step 403 if it is exceeded for an upper threshold time integral 301.

If the upper vibration threshold 201 or the upper pressure oscillation threshold limit has been exceeded for the upper threshold time integral 301, then the pilot/main fuel split 204 is increased in step 404 and the new split ratio is applied to the engine control in step 414. Hence, vibration and pressure oscillations are decreased after controlling the new split ratio, so that combustion flame reliability is increased by awarding flame out caused by pressure oscillations (which are indicative to the measured vibrations).

If the upper threshold time integral 301 is no not fulfilled in step 403, no corrective actions were conducted and the already used stored values for the engine parameters are further applied in step 415.

If in step 402 the upper vibration threshold 201 or the upper pressure oscillation threshold limit has not been exceeded, it is checked in step 405 if a high temperature threshold limit is exceeded. The high temperature threshold limit gives the temperature limit for the temperature of the combustion flame 111 and/or the housing of the combustion chamber 111, for example.

If the temperature threshold limit is exceeded it is checked in step 406 the high temperature threshold limit is exceeded over a threshold time integral.

If yes, the fuel supply, and in particular the pilot/main fuel split 204, is amended in step 407 and applied to the engine control in step 414 in order to avoid high temperature tips or the like.

If the high temperature threshold limit is not exceeded in step 405, it is checked in step 408 if the measured vibration 403 and/or the pressure oscillations exceed the lower vibration threshold limit 202.

If yes, it is checked in step 409 is the measured vibration to hundreds 3 and/or the measured pressure oscillation falls below the lower vibration threshold limit 204 a given threshold time integral.

If not, no corrective actions in the fuel supply control are conducted. If yes, the pilot/main fuel split to for is decreased in step 410 and is applied to the engine control in step 414. Hence, a pilot/main fuel split may be optimized in order to achieve the lowest NOx emissions.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 101: measuring parameters
- 102: comparing vibration
- 103: controlling fuel supply
- 104: set variable threshold value
- 105: measuring NOx of combustion
- 106: start new measuring cycle

- 110: gas turbine engine
- 111: combustion chamber
- 112: combustion flame
- 113: pressure sensor
- 114: temperature sensor
- 115: control unit
- 116: fuel control module
- 117: main fuel line
- 118: pilot fuel line
- 119: vibration measuring unit

- 201: upper vibration threshold limit
- 202: lower vibration threshold limit
- 203: vibration
- 204: pilot/main fuel split

- 301: upper time integral
- 302: lower time integral

- 310: start point of raising pilot/main fuel split
- 311: stop point of raising pilot/main fuel split
- 312: start point of lowering pilot/main fuel split
401 measuring vibration and temperature parameter 402 exceed upper vibration/pressure oscillation threshold limit 403 exceed over a threshold time integral 404 raise pilot/main fuel split 405 exceed high temperature threshold limit 406 exceed over a threshold time integral 407 decrease pilot/main fuel split 408 exceed lower vibration/pressure threshold limit 409 exceed over a threshold time integral 410 decrease pilot/main fuel split 414 apply amended pilot/main fuel split 415 use predefined engine operation parameter

## Claims

1. Method for controlling an engine vibration of a gas turbine engine (110), the method comprising
measuring the engine vibration of the gas turbine engine (110),
comparing the measured engine vibration with a threshold value of a nominal engine vibration,
controlling a fuel supply parameter of a fuel supply to a combustion chamber (111) of the gas turbine engine (110) for controlling combustion dynamics (pressure oscillations within the combustion chamber) of a combustion flame (112) within the combustion chamber (111),
wherein the engine vibration of the gas turbine engine (110) is indicative of the combustion dynamics of the combustion flame (112), so that the fuel supply is adjusted for controlling the combustion dynamics if the measured engine vibration exceeds the threshold value of the nominal engine vibration.

2. Method according to claim 1,
wherein the fuel supply parameter is the mass flow of fuel to the combustion chamber (111) and/or the pilot fuel/main flow split of the combustion chamber (111).

3. Method according to claim 1 or 2,
wherein the threshold value of the nominal engine vibration is a top threshold value which defines an upper nominal limit of the engine vibration,
wherein the fuel supply parameter is adjusted for controlling the combustion dynamics if the measured engine vibration is higher than the top threshold value of the nominal engine vibration.

4. Method according to one of the claims 1 to 3,
wherein the threshold value of the nominal engine vibration is a lower threshold value which defines a lower nominal limit of the engine vibration,
wherein the fuel supply parameter is adjusted for controlling the combustion dynamics if the measured engine vibration is lower than the lower threshold value of the nominal engine vibration.

5. Method according to one of the claims 1 to 4,
wherein the threshold value of the nominal engine vibration is variable and is dependent on the combustion dynamics of the combustion flame (112), such that
if the combustion dynamics decline, the threshold value for the engine vibration is increased, and
if the combustion dynamics raise, the threshold value for the engine vibration is lowered.

6. Method according to one of the claims 1 to 5,
wherein the step of controlling the fuel supply parameter is conducted after a predetermined time period is lapsed from the time point of exceeding the threshold value of the nominal engine vibration.

7. Method according to claim 6,
wherein the time period is determined by determining an integral of the time period on the one hand and a difference between threshold value of the nominal engine vibration and the measured value of the engine vibration.

8. Method according to one of the claims 1 to 7,
wherein the engine vibration of the gas turbine engine (110) is measured at an gas turbine component of the gas turbine engine (110),
wherein the gas turbine component is a gas generator, a power turbine, a gear box and/or a compressor train operation.

9. Gas turbine engine (110), comprising
a measuring unit (119) for measuring an engine vibration of the gas turbine engine (110),
a comparing unit configured for comparing the measured engine vibration with a threshold value of a nominal engine vibration,
a control unit (115) configured for controlling a fuel supply parameter of a fuel supply to a combustion chamber (111) of the gas turbine engine (110) for controlling combustion dynamics of a combustion flame (112) within the combustion chamber (111),
wherein the engine vibration of the gas turbine engine (110) is indicative of the combustion dynamics of the combustion flame (112), so that the fuel supply is adjusted for controlling the combustion dynamics if the measured engine vibration exceeds the threshold value of the nominal engine vibration.
